# EUROPEAN PATENT APPLICATION

(11) **EP 0 807 718 A2**
(43) Date of publication of application: **19.11.1997**
(21) Application number: 97500085.2
(22) Date of filing: 12.05.1997
(51) Int. Cl.: E02F 5/22, E02F 7/06

(54) **Gravel sorting-out and grinding machine and the like**

(30) Priority: 17.05.1996 ES 9601322 U
(71) Applicant: Alastuey Gallizo, Maria Pilar, 50617 Valarena (Zaragoza) (ES)
(72) Inventor: Aldaz Felipe, Ignacio, 50617 Valarena, (Zaragoza) (ES)
(74) Representative: Isern Jara, Jaime

(57) **Abstract**

GRAVEL SORTING-OUT AND GRINDING MACHINE AND THE LIKE, designed to pick up gravel from its relevant soils so as to have it sorted-out and crushed to subsequently supply it to the proper soil or to ductways or ditches, the machine is set up as of a tractor, trailer or similar vehicle, having at its lower frontal section, a penetration adjustable cutter (3) which scratches the soil gravel during the vehicle running, and a feeding belt (1) provided with successive drag scrapers (2), is envisaged over said cutter (3); the belt running up to an entry made in the upper portion of a frame (5) housing a shovel-fitted or bar crusher (6); this frame being interchangeable with another frame incorporating sorting-out trays (2) of gravel size; said frames having at its lower portion respective discharging hoppers of the crushed product (8) or sorted-out product (13) (fig. 1).

## Description

### Object of the invention

The present Utility Model application has as an object a gravel sorting out and grinding machine and the like having remarkable advantages and innovations in front of the prior art systems presently available used with equal or similar purposes.

More particularly, in the invention has been designed a machine mounted on a tractor, trailer or the like which machine can pick up the gravel from any road or access, crushing and sorting out said gravel and then apply it on the proper road or access or to some ditches or ductways for a subsequent passage to a power grader to go then along to a compacting operation.

### Background of the invention

There are presently available in the market, several models of gravel sorting out and impacting machines with the drawback of being fixed units, therefore the gravel has to be conveyed from its source site to the machines and later on the gravel has to be supplied to its working site, consequently increasing time and labour costs.

### Description of the invention

The gravel sorting out and grinding machine and the like, being the object of the present application is mounted on a tractor, trailer or the like and has a crusher provided with breaking rods or shovels; this crusher can easily be replaced by a tray unit sorting out the gravel size.

In a preferred mode of embodiment, the machine has a soil breakthrough cutter suitably fitted to the tractor's frontal lower side or the like, which cutter during the tractor's travel supplies the soil gravel to a shovel-fitted feeding belt going down to an access mouth existing at the upper side of the frame housing said breaking shovel-fitted crusher, the frame has at its lower side a discharging hopper carrying the already ground gravel towards the proper soil to be subsequently collected by any conventional means.

When the frame comprising said crusher is also replaced by another one having said sorting out trays provided with the pertinent product input and output deliveries, the product is expected to be supplied to a moveable conveyor belt carrying the product to the remote ditches or ductways.

The machine is further provided with the required electrical motors, switchboard and associated power generator so as to provide the required self-contained power necessary to drive the system active members.

The machine of the invention is thus providing practical means for grinding and sorting out diverse types of gravel at the original site, while achieving in this way remarkably transport, handling and gravel's labour time savings.

To further complete the description and to help in a better understanding of its characteristics, the present description is also accompanied by a set of drawings which figures illustratively and non-exhaustively show therein the most significant details of the invention.

### Brief description of the drawings

Figure 1 shows an elevation view of the machine provided with a breaking rod or shovel-fitted crusher.

Figura 2 shows a plan view of the machine.

Figure 3 shows an elevation view of said machine wherein said crusher has been replaced by the sorting out trays unit.

Figura 4 shows a plan view of this latter arrangement presenting a detail of the finished product distributing belt.

### Description of a preferred embodiment

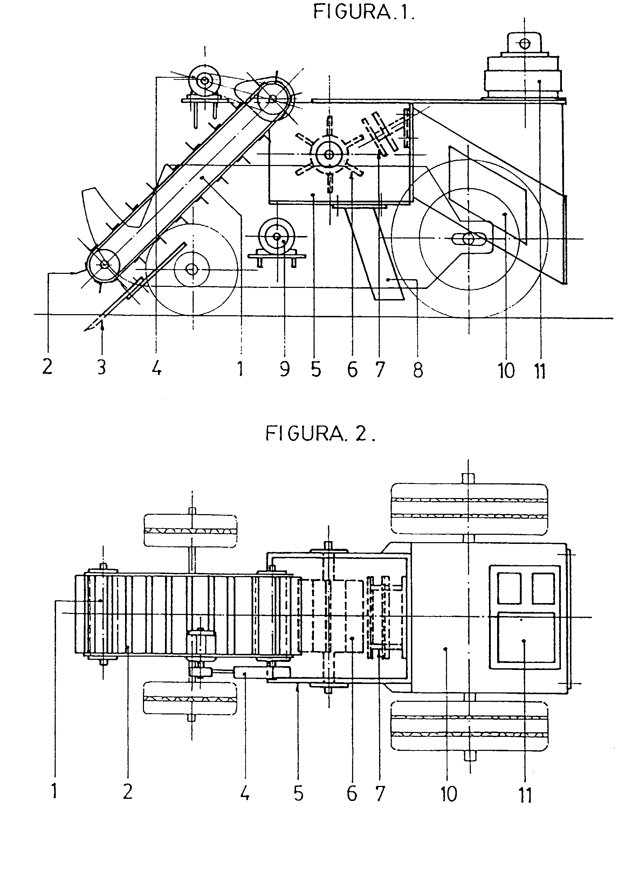

In view of the foregoing figures and according to the assigned numbering, in the embodiment can be appreciated a tractor or trailer at its frontal lower side being fitted with a breakthrough cutter 3 over which is mounted a feeding belt 1 provided with successive drag scrapers 2 driven by a reducer motor 4 carrying the gravel towards the feeding mouth of a frame 5 housing a breaking rod or shovel-fitted crusher 6 driven by an electrical motor 9, the crusher crushes the gravel delivering it to a discharging hopper 8 existing at the lower side of said frame 5, as shown in the figures 1 and 2.

The breakthrough cutter 3 is adjustable providing a selection of the required breakthrough depth and during the tractor's travel or the like, the soil gravel is scratched and supplied to the feeding belt 1, wherein by using its shovels 2, the gravel is carried towards the mouth of the frame 5 housing the crusher, these rods or shovels 6 break and crush the gravel up to a prearranged size using a measuring-adjustable stop 7 provided with a return spring, which distance to said shovels provides for the final size of the gravel which is most suitable to each requirement, such as is shown in the figures 1 and 2.

Said adjusting system 7 is fitted on a crusher's control and starting switchboard 10.

Further, the crusher is a self-contained operating unit and for this purpose a power generator 11 is used.

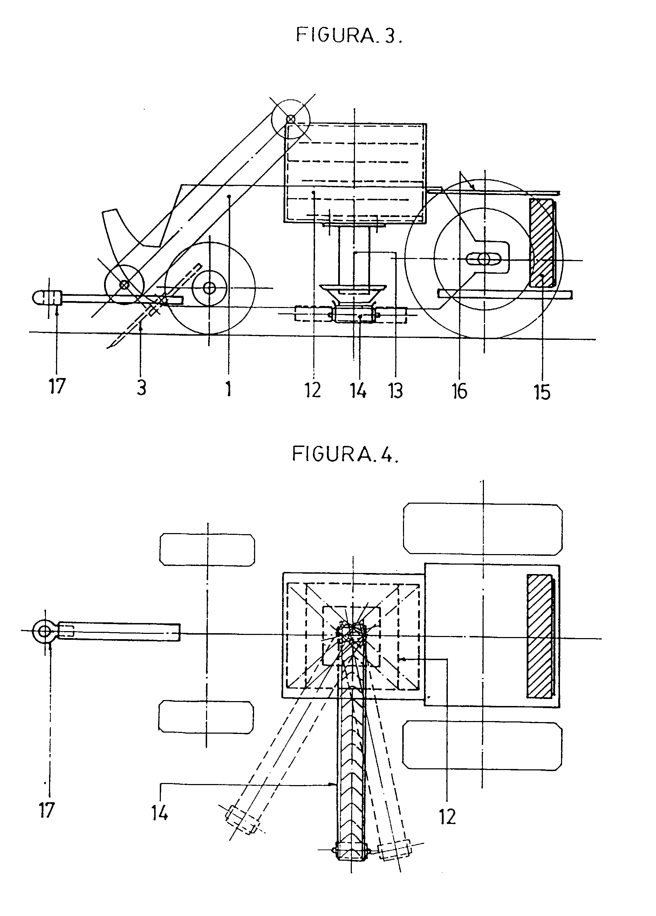

In the figures 3 and 4, is shown how the frame 5 having said crusher has been replaced by another frame provided with a column arrangement of trays 12 sorting out the gravel size, with the peculiarity that said frame has an output duct 12 directed towards a moveable finished product's conveying belt 14.

In said arrangement, the associated control switchboard 15, the access platform 16 and a hook 17 engaged to the tractor, in the case when the machine is fitted on a trailer, are shown.

Said sorting out trays 12, as shown in the figure 3, allow to sort out, at the required gravel size, according to the desired work to be performed, such that the sorted out product falls through a duct 13 towards the conveying belt 14 which function is to distribute said product to the required site.

The advantage of this sorting out installation 12 and of the conveying belt 14 is that the fine product or anyone to be adopted by the gravel can be located at the most suitable site because the belt 14 is laterally conveying the product, as shown in the figure 4, to different ductways, such ductways might be gas pipelines, oil pipelines, water pipes, telephone trenches and any other type of ditches.

Further, when the sorting out machine 12 pulls fine product out and this product is directly conveyed by the belt 14 to the ditch, said product can then directly be pretensioned.

## Claims

1. GRAVEL GRINDING AND SORTING OUT MACHINE AND THE LIKE designed to collect gravels from any road or access, to crush and sorting out said gravel and supply it to the proper road or access or to ditches or ductways, essentially characterized in that it is a setup from a vehicle, such as a tractor, trailer or the like, which at the frontal lower side has an adjustable breakthrough cutter (3) able to scratch the different soil gravels during the running of the tractor or the like on the soil, above said cutter (3) being provided a feeding belt (1), incorporating successive drag scrapers (2) and being fed by a reducer motor (4), this belt going towards an input mouth made at the upper side of a frame (5) housing a breaking rod or shovel-fitted crusher (6) driven by an electrical motor (9), said frame being provided to be interchangeable with another frame having some trays (12) sorting out the gravel size, said frames having at the lower side respective discharge hoppers of the sorted out (13) and ground (8) product.

2. GRAVEL GRINDING AND SORTING OUT MACHINE AND THE LIKE, according to claim 1, characterized in that the frame (5) comprises some measuring-adjustable stops (7) of the gravel size, as a function of its approach to the crusher's shovel or rods (6), said stops (7) being provided with a return spring and being mounted on a control and starting switchboard (10) of said crusher.

3. GRAVEL GRINDING AND SORTING OUT MACHINE AND THE LIKE, according to claim 1, characterized in that it has a power generator (11) providing the required power to the unit so as to facilitate its self-contained operation.

4. GRAVEL GRINDING AND SORTING OUT MACHINE AND THE LIKE, according to claim 1, characterized in that a moveable finished product's conveying belt (14) is provided, said belt being located below the hopper (13) discharging the gravel coming from the trays (12) sorting out the gravel size.
